Europäisches Patentamt

European Patent Office

Office européen des brevets

(11) Publication number: **0 557 582 A1**

# EUROPEAN PATENT APPLICATION

(21) Application number: **92118632.6**

(22) Date of filing: **30.10.92**

(51) Int. Cl.5: **G06F 13/42**

(30) Priority: **28.02.92 KR 317292**

(43) Date of publication of application:
**01.09.93 Bulletin 93/35**

(84) Designated Contracting States:
**DE FR GB**

(71) Applicant: **SAMSUNG ELECTRONICS CO. LTD.**
**416 Maetan 3-dong, Kwonsun-ku**
**Suwon, Kyungki-do(KR)**

(72) Inventor: **Kim, Kyoung Su**
**198-32, Maetan 2-dong, Kwonsun-ku**
**Suweon, Kyungki-do(KR)**

(74) Representative: **Patentanwälte Grünecker,**
**Kinkeldey, Stockmair & Partner**
**Maximilianstrasse 58**
**D-80538 München (DE)**

(54) **Clock re-generating circuit for system controller.**

(57) A clock re-generating circuit for a system controller is disclosed. When the system controller makes interface with a peripheral circuit having a lagging operating frequency, the clock periods are varied by generating a slow signal after decoding the address bus generated under the condition. When the system controller operates after receipt of a ready signal from a peripheral circuit, the clock periods are varied in such a manner as not to access to the data by holding the operation of the system controller during a waiting signal is kept active. In this manner, the system controller is kept in the optimum interface state with the peripheral circuits.

FIG.4

FIELD OF THE INVENTION

The present invention relates to an electronic apparatus using a system controller for making interface with peripheral circuits, and particularly to a clock re-generating circuit for the system controller, in which an optimum interface state can be maintained with the peripheral circuits by arbitrarily varying the operating frequency of the system controller at relevant time points.

BACKGROUND OF THE INVENTION

Generally, it frequently happens that the operating frequency of the peripheral circuits lags behind that of the system controller, and therefore, when the system controller is made interface with the peripheral circuits, a proper matching is not realized, with the result that it has to be waited for several periods or for a fraction of one period during a communication. In such a case, either the waiting is made by checking through the software, or the same portion is repeatedly carried out.

Consequently, the load of the software is increased, and a loss in terms of time becomes severe.

SUMMARY OF THE INVENTION

The present invention is intended to overcome the above described disadvantages of the conventional techniques.

Therefore it is the object of the present invention to provide a clock re-generating circuit for a system controller, in which, when the system controller makes interface with a peripheral circuit having a lagging operating frequency, a slow signal is output after decoding the generated address bus so as for the clock period to be varied, and, during a clock is kept active at an arbitrary time, the operation of the system controller is momentarily held so as for an accessing not to be done simultaneously to two data, thereby keeping the optimum interface state with the peripheral circuits during the system controller reads or writes data.

In achieving the above object, the clock re-generating circuit for a system controller according to the present invention includes an address decoding circuit for generating slow signals by decoding the address of a peripheral circuit having a lagging operating frequency, and a clock generating circuit connected to the address decoding circuit, for forcibly delaying the clock periods upon input from the outside. The clock generating circuit comprises first, second and third delaying parts being connected in parallel. Each of the delaying parts comprises a plurality of AND gates, a plurality of NOR gates for receiving the outputs from the AND gates, and a plurality of flip-flops for receiving the outputs from the NOR gates.

BRIEF DESCRIPTION OF THE DRAWINGS

The above object and other advantages of the present invention will become more apparent by describing in detail the preferred embodiment of the present invention with reference to the attached drawings in which:

Fig. 1 illustrates waveforms showing the varied clock periods of the system controller according to the present invention;

Fig. 2 illustrates a state table of the present invention;

Fig. 3 illustrates a state diagram of the present invention; and

Fig. 4 is a circuital illustration of the circuit of the present invention, based on Figs. 2 and 3.

DESCRIPTION OF THE PREFERRED EMBODIMENT

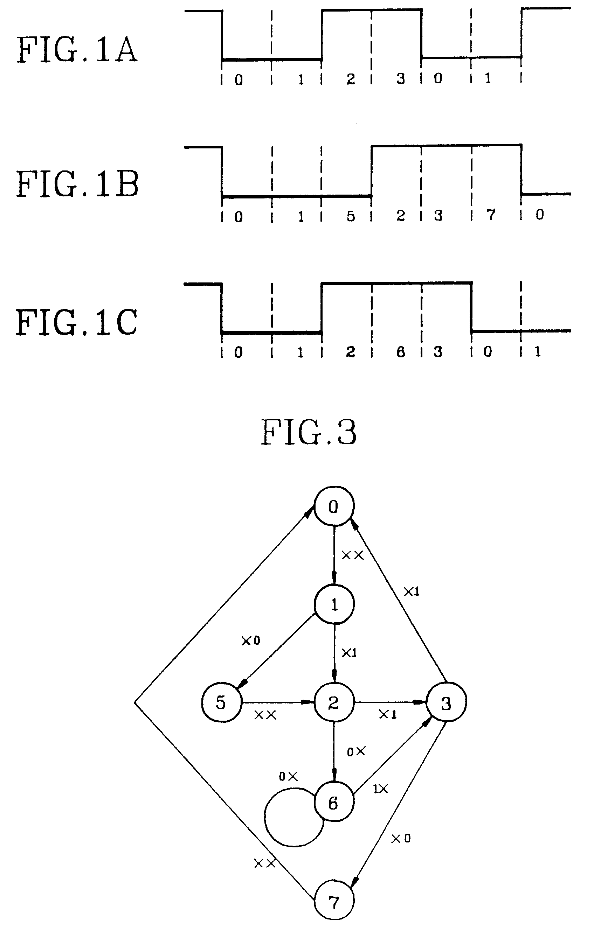

Fig. 1 illustrates different examples of the clock periods of the system controller according to the present invention. Referring to Fig. 1A, there is illustrated a clock input into the system controller during the normal operation, and the clock maintains a waveform having a duty of 5:5, while the states is such that 0, 1, 2 and 3 are repeated. Fig. 1B illustrates a clock input into the system controller upon generating a slow signal, and this clock generates states 5 and 7, thereby extending the clock period of the system controller. Fig. 1C illustrates a case in which the system controller is activated after receipt of a ready signal from a peripheral circuit. Here, the clock of the system controller continuously maintains state 6 until a ready signal is activated, and before state 2 is shifted to state 3.

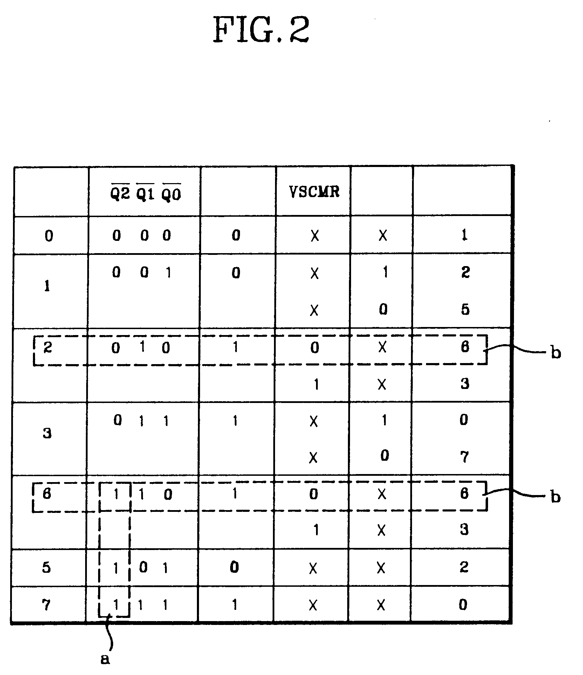

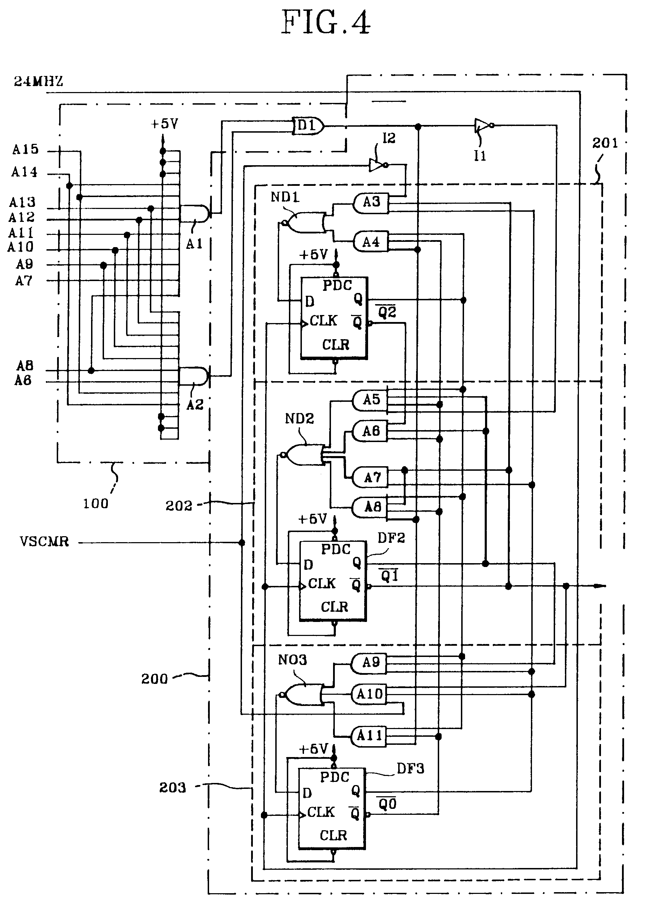

Fig. 2 is a state table for designing a variable operating frequency circuit of the system controller according to the present invention, while Fig. 3 illustrates a state diagram for it.

Fig. 4 illustrates the clock re-generating circuit for the system controller according to the present invention, and the clock re-generating circuit includes an address decoding circuit 100 and a clock generating circuit 200.

Assuming that addresses A15-A6 are generated when the system controller makes interface with a peripheral circuit having a lagging operating frequency, the address decoding circuit 100 generates a slow signal by decoding the addresses A15-A6. The address decoding circuit 100 includes an AND gate A1 for receiving the addresses A15-A7 as inputs, another AND gate A2 for receiving the addresses A15-A8 and A6 as inputs, and an OR gate 01 for generating a slow signal upon finding that any one of the AND gates A1 and A2 generates "1", after receipt of the outputs of the AND gates A1 and A2 and after carrying out logic combination on them.

The clock generating circuit 200 is a circuit designed based on the state table of Fig. 2 and the state diagram of Fig. 3, and includes delaying parts 201 - 203 for carrying out delays after receipt of clock signals of 24 MHz, while each of the delaying parts includes a D flip-flop and a plurality of AND gates and NOR gates.

In the case where the system controller has to be activated after receipt of a ready signal from a peripheral circuit when making interface with the peripheral circuit, the system controller has to enter a waiting state if a ready signal is not received. Here, the waiting signal is indicated by VSCMR, and, as long as VSCMR is active, the operation of the system controller is held momentarily, so that two data should not be simultaneously accessed.

For the circuit of the present invention constituted as described above, its various clock periods are illustrated in Fig. 1.

States in this specification refers to the clock states of Figs. 1A, 1B and 1C.

That is, Fig. 1A illustrates clock periods which consist of repetitions of state 0, state 1, state 2 and state 3. Fig. 1B illustrates a clock that is activated upon inputting a slow signal, and its clock period consists of repetitions of state 0, state 1, state 5, state 2, state 3 and state 7. Fig. 1C illustrates a clock which is activated during a waiting period until a ready signal is input from a peripheral circuit, and the clock consists of state 0, state 1, state 2, state 6 and state 3. Here state 6 is continuously maintained until a ready signal is input from a peripheral circuit.

First, referring to Fig. 1, state 0 advances to state 1 regardless of the VSCMR signal and the slow signal, and therefore, the VSCMR and slow signals become XX (redundancy). Further, state 1 has two cases, and the first case is that in which state 1 advances to state 2 as shown in Figs. 1A and 1C, while the second case is that in which state 1 advances to state 5 as shown In Fig. 1B. When state 1 advances to state 2, the VSCMR signal has no effect, and therefore, the VSCMR signal becomes X, while the slow signal has a value of "1". When state 1 advances to state 5, the VSCMR signal also has no effect, and therefore, the VSCMR signal becomes X, while the slow signal should have a value of 0 as shown in Fig. 1B.

Meanwhile, state 2 has two cases, i.e., that of shifting to state 3 as shown in Figs. 1A and 1B, and that of shifting to state 6 as shown in Fig. 1C.

Under this condition, when shifting from state 2 to state 6, the slow signal does not give any influence at all, and therefore, the slow signal becomes X, while the VSCMR signal has to have a value of 0 as in Fig. 1C. Meanwhile, when shifting from state 2 to state 3, the slow signal also does not give any influence at all, and therefore, the slow signal becomes X, while the VSCMR signal has to have a value of 1 as in Fig. 1C.

For the same reason, when shifting from state 3 to state 0 and from state 3 to state 7, the slow and VSCMR signals have the same values as the case where shift is made from state 1 to state 2 and from state 1 to state 5, except that the value of the clock is shifted from 0 to 1.

Meanwhile, when shifting from state 6 to state 6 and from state 6 to state 3, the slow and VSCMR signals have the same values as the case where shift is made from state 2 to state 6 and from state 2 to state 3.

Meanwhile, when shifting from state 5 to state 2 and from state 7 to state 0, the shift is made regardless of the slow and VSCMR signals, and therefore, the slow and VSCMR signals all become XX.

Thus, Fig. 2 is a state table prepared based on the above described states, and illustrates the outputs from the D flip-flops DF1-DF3 which are used for forming states $\overline{Q2}$, $\overline{Q1}$ and $\overline{Q0}$.

Further, the state diagram of Fig. 3 is prepared based on the state table of Fig. 2.

Here, the states are represented by circles, and the shiftings between the states are represented by straight lines which interconnect the circles. The numerals which are entered the circles show the shifting state of the clocks of Figs. 1A, 1B and 1C. On each of the straight lines, there are entered two figures, and, of these figures, the inner one indicates the VSCMR signal, while the outer one indicates the slow signal.

Therefore, the XX, which is entered on the straight line connecting from state 0 to state 1, indicates that the shift is made regardless of the slow and VSCMR signals. When shifting from state 1 to state 2, the slow signal has only to have a value of 1 regardless of the VSCMR signal. When shifting from state 1 to state 5, the slow signal has only to be 0 regardless of the VSCMR signal. When shifting from state 5 to state 2, the shift is made unconditionally regardless of the slow and VSCMR signals, and therefore, both of the slow and VSCMR signals become XX.

The rest of the states are shifted in the same manner, and they are different from the state table of Fig. 2 only in their expressions, there being no essential difference between them.

Therefore, state equations call be formed referring to Figs. 1, 2 and 3, and these state equations are arithmetic formulas defining the shiftings of the D flip-flops. Q2 indicates the portion (a), and $\overline{Q2}$ = state 6 + state 5 + state 7    (1)

In Formula (1) above, state 6 corresponds to the portion (b) of the state table of Fig. 2, and the next states to appear are state 2 and state 6.

Further, the VSCMR and slow signals are 0 and X respectively for state 2 and state 6, and therefore, state 6 of Formula (1) can be written as follows.

state 6 = state 2 * $\overline{VSCMR}$ + state 6 * $\overline{VSCMR}$    (2)

Meanwhile, state 5 and state 7 of Formula (1) can be written respectively as follows.

state 5 = state 1 * $\overline{SLOW}$    (3)

state 7 = state 3 * $\overline{SLOW}$    (4)

Accordingly, Formula (1) can be rewritten as shown below by referring to Formulas (2), (3) and (4).

$\overline{Q2}$ = state 2 * $\overline{VSCMR}$ + state 6 * $\overline{VSCMR}$ + state 1 * $\overline{SLOW}$ + state 3 * $\overline{SLOW}$    (5)

Further, state 2 of Formula (5) can be written in the form of the outputs of the D flip-flops of the state table (Fig. 2) as follows.

state 2 = Q2 * $\overline{Q1}$ * Q0    (6)

In the same way,

state 3 = Q2 * $\overline{Q1}$ * $\overline{Q0}$    (7)

state 1 = Q2 * Q0 * $\overline{Q0}$    (8)

state 6 = $\overline{Q2}$ * $\overline{Q1}$ * Q0    (9)

Accordingly, Formula (5) can be rewritten as follows by referring to Formulas (6) - (9).

$\overline{Q2}$ = Q2 * $\overline{Q1}$ * Q0 * $\overline{VSCMR}$ + $\overline{Q2}$ * $\overline{Q1}$ * Q0 * $\overline{VSCMR}$ + Q2 * Q1 * $\overline{Q0}$ * $\overline{SLOW}$ + Q2 * $\overline{Q1}$ * $\overline{Q0}$ * $\overline{SLOW}$    (10)

Q2 = (Q2 + $\overline{Q2}$) ($\overline{Q1}$ * Q0 * $\overline{VSCMR}$) + (Q1 + $\overline{Q1}$) (Q2 * $\overline{Q0}$ * $\overline{SLOW}$)    (11)

The terms (Q2 + $\overline{Q2}$) arid (Q1 + $\overline{Q1}$) of Formula (11) become 1 according to the Boolean arithmetic, and therefore, Formula (11) can be rewritten as follows.

$\overline{Q2}$ = $\overline{Q1}$ * Q0 * $\overline{VSCMR}$ + Q2 * $\overline{Q0}$ * $\overline{SLOW}$    (12)

Then, $\overline{Q1}$ and $\overline{Q0}$ can be defined as follows by applying the same procedures as those for Formulas (1) - (12).

4

$$\overline{Q1} = \text{state } 2 + \text{state } 3 + \text{state } 6 + \text{state } 7$$

$$= \text{state } 1 * \text{SLOW} + \text{state } 5 + \text{state } 2 * \text{VSCMR} +$$

$$\text{state } 6 * \text{VSCMR} + \text{state } 2 * \overline{\text{VSCMR}} + \text{state} * \overline{\text{VSCMR}} +$$

$$\text{state } 3 * \overline{\text{SLOW}}$$

$$= \text{state } 1 * \text{SLOW} + \text{state } 5 + (\text{VSCMR} + \overline{\text{VSCMR}}) \text{ state } 2 +$$

$$(\text{VSCMR} + \overline{\text{VSCMR}}) \text{ state } 6 + \text{state } 3 * \overline{\text{SLOW}}$$

$$= \text{state } 1 * \text{SLOW} + \text{state } 5 + \text{state } 2 + \text{state } 6 + \text{state } 3 * \overline{\text{SLOW}}$$

$$= Q2 * Q1 * \overline{Q0} * \text{SLOW} + \overline{Q2} * Q1 * \overline{Q0} + Q2 * \overline{Q1} *$$

$$Q0 + \overline{Q2} * \overline{Q1} * Q0 + Q2 * \overline{Q1} * \overline{Q0} * \overline{\text{SLOW}}$$

$$= Q2 * Q1 * \overline{Q0} * \text{SLOW} + \overline{Q2} * Q1 * \overline{Q0} + (Q2 + \overline{Q2})(\overline{Q1} + Q1) +$$

$$Q2 * \overline{Q1} * \overline{Q0} * \overline{\text{SLOW}}$$

$$= Q2 * Q1 * \overline{Q0} * \text{SLOW} + \overline{Q2} * Q1 * \overline{Q0} + \overline{Q1} * Q0 +$$

$$Q2 * \overline{Q1} * \overline{Q0} * \overline{\text{SLOW}} \quad \dots \quad (13)$$

$$\overline{Q0} = \text{state } 1 + \text{state } 3 \text{ state } 5 \text{ state } 7$$

$$= \text{state } 0 + \text{state } 2 * \text{VSCMR} + \text{state } 6 * \text{VSCMR} + \text{state } 1 *$$

$$\overline{\text{SLOW}} + \text{state } 3 * \overline{\text{SLOW}}$$

$$= Q2 * Q1 * Q0 + Q2 * \overline{Q1} * Q0 * \text{VSCMR} +$$

$$\overline{Q2} * \overline{Q1} * Q0 * \text{VSCMR} + Q2 * Q1 * \overline{Q0} + \overline{\text{SLOW}} +$$

$$Q2 * \overline{Q1} * \overline{Q0} * \overline{\text{SLOW}}$$

$$= Q2 * Q1 * Q0 + (Q2 + \overline{Q2})(\overline{Q1} * Q0 * \text{VSCMR}) +$$

$$(Q1 + \overline{Q1})(Q2 * \overline{Q0} * \overline{\text{SLOW}})$$

$$= Q2 * Q1 * Q0 + \overline{Q1} * Q0 * \text{VSCMR} + Q2 * \overline{Q0} * \overline{\text{SLOW}} \dots (14)$$

Thus, a circuit that is designed based on the above logic formulas is the clock generating circuit 200 of Fig. 4. That is, the delaying part 201 is designed based on Formula (12), and the delaying part 202 is designed based on Formula (13), while the delaying part 203 is designed based on Formula (14).

According to the present invention as described above, when the system controller makes interface with a peripheral circuit having a lagging operating frequency, the clock period is varied by generating a slow signal after decoding the address which Is generated under the condition. On the other hand, when the system controller has to start operation after receipt of a ready signal from a peripheral circuit, the clock period is varied in such a manner as not to access to the data by holding the operation of the system controller during the waiting signal is kept active. Consequently, the system controller can maintain the optimum interface state with the peripheral circuits.

**Claims**

1. A clock re-generating circuit for a system controller, comprising:

an address decoding circuit for generating slow signals by decoding the address of a peripheral circuit having a lagging operating frequency; and

a clock generating circuit connected to said address decoding circuit, for forcibly delaying the clock periods upon input from the outside;

said clock generating circuit comprising: first, second and third delaying means, said delaying means being connected in parallel,

each of said delaying means comprising: a plurality of AND gates; a plurality of NOR gates for receiving the outputs from said AND gates; and a plurality of flip-flops for receiving the outputs from said NOR gates.

2. The clock re-generating circuit for a system controller as claimed in claim 1, wherein said first delaying means is designed based on the following logic formula:

$$\overline{Q2} = \overline{Q1} * Q0 * \overline{VSCMR} + Q2 * \overline{Q0} * \overline{SLOW}$$

3. The clock re-generating circuit for a system controller as claimed in claim 1, wherein said second delaying means is designed based on the following logic formula:

$$\overline{Q1} = Q2 * Q1 * \overline{Q0} * SLOW + \overline{Q2} * Q1 * \overline{Q0} + \overline{Q1} * Q0 + Q2 * \overline{Q1} * \overline{Q0} * \overline{SLOW}$$

4. The clock re-generating circuit for a system controller as claimed in claim 1, wherein said third delaying means is designed based on the following logic formula:

$$\overline{Q0} = Q2 * Q1 * Q0 + \overline{Q1} * Q0 * VSCMR + Q2 * \overline{Q0} * \overline{SLOW}$$

FIG.1A

FIG.1B

FIG.1C

FIG.3

# FIG.2

| | $\overline{Q2}\ \overline{Q1}\ \overline{Q0}$ | | | VSCMR | | |
|---|---|---|---|---|---|---|
| 0 | 0 0 0 | 0 | | X | X | 1 |
| 1 | 0 0 1 | 0 | | X | 1 | 2 |
| | | | | X | 0 | 5 |
| 2 | 0 1 0 | 1 | | 0 | X | 6 |
| | | | | 1 | X | 3 |
| 3 | 0 1 1 | 1 | | X | 1 | 0 |
| | | | | X | 0 | 7 |
| 6 | 1 1 0 | 1 | | 0 | X | 6 |
| | | | | 1 | X | 3 |
| 5 | 1 0 1 | 0 | | X | X | 2 |
| 7 | 1 1 1 | 1 | | X | X | 0 |

a

b

# FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>A | US-A-4 050 096 (BENNETT ET AL.)<br>* column 3, line 50 - line 64 *<br>* column 12, line 26 - column 13, line 49 *<br>* abstract; claims 1-3; figure 11 * | 1<br>2-4 | G06F13/42 |
| X<br>A | US-A-4 458 308 (HOLTEY ET AL.)<br>* column 1, line 16 - line 47 *<br>* column 2, line 22 - line 45 *<br>* column 5, line 48 - column 6, line 7 *<br>* column 6, line 54 - column 7, line 57 *<br>* claim 1; figures 3-4 * | 1<br>2-4 | |
| X | WO-A-8 902 128 (MOTOROLA INCORPORATION)<br>* page 1, paragraph 2 -paragraph 3 *<br>* page 3, paragraph 3 - page 4, paragraph 3 *<br>* page 7, paragraph 2 - page 8, paragraph 4; figures 1-2 * | 1 | |

-----

TECHNICAL FIELDS SEARCHED (Int. Cl.5 )

G06F

The present search report has been drawn up for all claims

| Place of search | Date of completion of the search | Examiner |
|---|---|---|
| THE HAGUE | 04 JUNE 1993 | NGUYEN XUAN HIEP C. |